# EUROPEAN PATENT APPLICATION

(11) **EP 4 283 255 A1**
(43) Date of publication of application: **29.11.2023**
(21) Application number: 22275065.5
(22) Date of filing: 25.05.2022
(51) Int. Cl.: G01C 21/00, G05D 1/00, G06N 5/02

(54) **CONTROLLING AN AQUATIC VESSEL**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A computer-implemented method of controlling an aquatic vessel comprises receiving (202) input data comprising a plurality of observations from a respective plurality of sensors associated with the aquatic vessel. The method further comprises populating (206) a graph database using the input data, wherein the graph database is based on an ontology defining the plurality of sensors, and performing (208) a query on the graph database to generate information relating to controlling the aquatic vessel.

## Description

### FIELD OF THE INVENTION

The present invention relates to controlling an aquatic vessel.

### BACKGROUND

It is beneficial that data handling between software modules, such software for controlling vehicles including aquatic vessels, is consistent. It is also desirable for the data to be interpretable by both human and machine operations in order to reduce the risk of errors. For example, in the case of controlling aquatic vessels, such as a submarine, data from several different sensors may be needed to form an accurate hypothesis of events relating to the submarine and this could lead to risks if the data is only machine-intelligible.

It is also desirable to have data stored in a manner that enables queries on the data to be executed efficiently. In aquatic vessel environments fast retrieval of information, ideally in real-time or near real-time, is of great importance. Submarine crews, in particular, are highly dependent on efficient data retrieval because visual identification of contacts is often not possible. The ability to rapidly form an accurate hypothesis of a contact's location, vessel type and speed based on readings from multiple sensors can provide crews with an edge over other vessels.

### SUMMARY

Embodiments of the present invention are intended to address the above technical problems.

Embodiments can model data usable for controlling an aquatic vessel, particularly data that is provided by sensors associated with the vessel, in the form of an ontology that forms the basis of a graph database. The graph database can be queried in order to output information/signals useable for controlling the vessel.

Embodiments can be based on a glossary of terms necessary for an information model in the form of a structured ontology. In some embodiments the SOSA ontology is used as the basis for the terms and concepts that form the model. The data may be streamed into the graph database which is populated with new sensor observations periodically, e.g. roughly every one to six seconds. The input data can include, for example, information about ownship position, heading and speed, as well as the bearings of one or more contact vessels.

The ontology, which is usually already loaded into the graph database, can define how the observation data is stored. The use of the ontology can facilitate fast retrieval of information by improving the interface between queries and the database. Embodiments can therefore provide submarine crews or the like with information advantages. Information advantage can be loosely defined as the credible advantage gained through the continuous, adaptive, decisive and resilient employment of information and information systems. Embodiments can take a linked data approach to data management that helps provide controllers of aquatic vessels with an information advantage.

According to an aspect of the present invention, there is provided a computer-implemented method of (generating information for) controlling an aquatic vessel, the method comprising:
receiving input data comprising a plurality of observations from a respective plurality of sensors associated with the aquatic vessel;
populating a graph database using the input data, wherein the graph database is based on an ontology defining the plurality of sensors, and
performing a query on the graph database to generate information relating to controlling the aquatic vessel.

The ontology may comprise a formal ontology that can define concepts and relationships relating to the plurality of sensors.

The ontology can be used to produce a database schema of the graph database. The database schema may be produced by generating a knowledge graph structure based on the ontology in Resource Description Format (RDF). In some embodiments an RDF, e.g. Turtle, file (encoding the concepts and relationships) is used as the schema of the graph database.

The populating the graph database may comprise adding nodes comprising the plurality of observations of the input data to the graph database. The populating the graph database may comprise streaming the input data to populate the graph database, e.g. populating the graph database with new said observations periodically, e.g. every 6 or less seconds. In some embodiments, the graph database may comprise a Neo4j graph database.

The populating the graph database may comprise converting the input data to RDF. The converting the input data may comprise adjusting at least part of a data structure (e.g. column headings) of the input data to match at least part of a data structure (e.g. column headings, etc) of the ontology, e.g. using a Python script.

The ontology may be created based on a Sensor, Observations, Sample and Actuator, SOSA, framework. The ontology may include additional classes not included in the SOSA framework. The additional classes may include at least one of: heading, compass and hasUncertainty.

The method may further comprise building a time tree for the graph database that splits the observations into pre-determined periods of time. A timestamp included in the input data for each said observation can be used to generate a new branch for each observation in the time tree.

The plurality of sensors may be located onboard the aquatic vessel. At least part of the input data may be received from a command system for the aquatic vessel.

The method may further comprise using the information relating to controlling the aquatic vessel to control the aquatic vessel. The method may comprise determining a situation of the aquatic vessel, and outputting a signal for directly or indirectly controlling the aquatic vessel in response to the situation.

According to another aspect of the present invention there is provided an aquatic vessel control system comprising at least one processor configured to execute a method substantially as described herein. The system may be located in a control room or onboard the aquatic vessel.

According to another aspect of the present invention there is provided an aquatic vessel comprising a plurality of sensors and/or configured to receive control signals based on the information relating to controlling the aquatic vessel.

According to a further aspect there is provided a method of generating an ontology substantially as described herein. According to a further aspect there is provided a method of generating a graph database substantially as described herein.

According to a further aspect of the present invention there is provided a computer readable medium, or circuit, storing a computer program to operate methods substantially as described herein.

It will be appreciated that features described in relation to one aspect of the present invention can be incorporated into other aspects of the present invention. For example, an apparatus of the invention can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

### BRIEF DESCRIPTION OF THE DRAWINGS

Embodiments of the invention will now be described by way of example only and with reference to the accompanying drawings:
Figure 1 is a block diagram of an example embodiment;
Figure 2 is a flowchart depicting steps performed by an example embodiment;
Figure 3 schematically illustrates concepts and relationships from the SSN ontology that can be used to model detection of a sound by sonar sensor;
Figure 4 schematically illustrates actual submarine terms that can be used to model the detection of sound via sonar from a contact vessel;
Figure 5 is a schematic diagram of a SOSA ontology observation perspective;
Figure 6 is a schematic diagram of a SOSA ontology observation perspective with new terms relevant to submarine sensor observations integrated;
Figure 7 schematically illustrates two observations in the ontology;
Figure 8 is a schematic diagram of a subsection of the ontology displayed in a Neo4j graph database;
Figure 9 schematically illustrates an example ontology in the Neo4j graph database;
Figure 10 schematically illustrates how a single observation mode in the graph database is mapped to the ontology;
Figure 11 schematically illustrates a link between a contact observation and a time tree, and
Figures 12A - 12C show example time tree queries.

### DETAILED DESCRIPTION

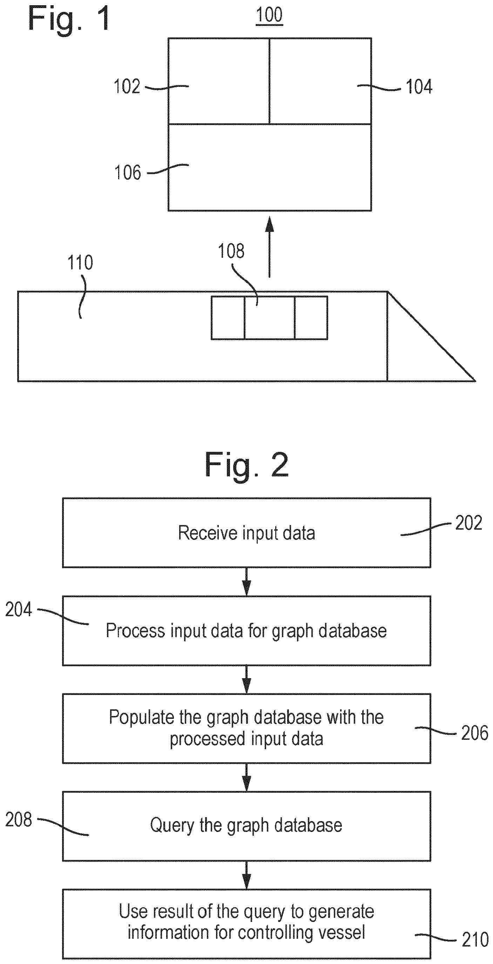

Figure 1 is a block diagram of a computing device 100 configurable to execute embodiments of the invention. The device will normally comprise, or be associated with, a Central Processing Unit (CPU) 102, a memory 104 and a communications interface 106. The interface can provide data communication between the device and other devices/components via a wireless connection or the like. The computing device can comprise, for example, a desktop class PC. Other components and features of the device, such as a user interface, display, etc, will be well-known to the skilled person and need not be described herein in detail.

In a typical embodiment the device 100 can receive input data via the interface 106. The input data will typically comprise observations from a plurality of sensors 108 associated with an aquatic vessel 110. The vessel may comprise any suitable type of aquatic vessel, including a submarine. The vessel may be fully or partially autonomous, or may receive commands from a local or remote human user. The vessel can also comprise a control system (not shown) which may communicate with the computer 100 and/or other remote systems, e.g. in order to receive control signals.

A non-exhaustive list of examples of suitable sensors 108 includes a velocity sensor, accelerometer, sonar array, radar, visual/camera, hydrophone, echosounder, pressure sensor, temperature sensor, density sensor, gyroscope, magnetic anomaly detectors, radio antenna. The observations may comprise readings representing characteristics such as speed, bearing, etc, of the vessel on which the sensors are mounted (the "ownship") and/or characteristics of other remote vessels or objects detected by at least one of the sensors. A non-exhaustive list of examples of characteristics includes course, speed, depth, bearing, range, classification, bearing rate, range rate, speed of sound, pressure, salinity, temperature, density, pitch, roll and conductivity. All or some of the input data may be received at the interface 106 directly from one or more of the sensors, or indirectly via another component, such as a local or remote vessel system/subsystem. It will be appreciated that the type, format, units, etc, of the input data can vary.

In some cases, in particular during system development, the input data can be gathered from a simulated environment, which may be set up using a simulator such as Command Professional Edition (see Matrix Games, "Command Professional Edition," 16 11 2021, available at: https://command.matrixgames.com/?page_id=3822). This is a wargaming simulator that allows users to model military scenarios and gather combat system representative data for analysis. In some cases the maritime simulation environment can include the ownship submarine and several contact vessels, with the ownship being assigned a series of waypoints through which it would traverse whilst continuously gathering data from its sensors.

Figure 2 is a flowchart depicting operations in an example method 200 according to an embodiment operates and shows steps performed by means of software instructions being executed by the computing device 100. It will be appreciated that at least one of the steps described herein may be re-ordered or omitted. One or more additional steps may be performed in some cases. Further, although the steps are shown as being performed in sequence in the Figures, in alternative embodiments some of them may be performed concurrently, possibly on different processors or cores. It will also be understood that embodiments can be implemented using any suitable software, programming language, data editors, etc, and may be represented/stored/processed using any suitable data structures and formats.

The method 200 will typically be part of a software application that can be used to assist with controlling an aquatic vessel. Embodiments can provide an aquatic vessel control system (e.g. in a submarine control room) that can promote consistency in data handling between software modules. In some embodiments, the software application may transmit signals to the aquatic vessel in order to directly control it, e.g. change its speed, bearing, etc. It will be understood that the application output may be processed in any suitable manner in order to produce signals suitable for controlling the vessel. Alternatively or additionally, the application may output data that can be used to control the vessel in coordination (e.g. via a display) with a human user.

At step 202 the method receives the input data. At step 204 the input data is processed so that it can be used to populate a graph database that is based on an ontology created according to an embodiment. At step 206 the graph database is populated with the processed input data. Thus, the graph database will contain sensor observations stored against the ontology.

At step 208 a query performed on the graph database. The query may be created using a user interface of the application 200, or it may originate from a different source. Examples of queries will be given below. The result of the query may be used by an algorithm (which may be part of the application 200 or another application) to determine at least one aquatic vessel command scenario, e.g. if a submarine is at risk of grounding. In this example, the algorithm can monitor the depth of the highest and lowest point of the submarine in the ocean and compare it to the depth of the sea floor at that location and the max depth of any surface vessel to ensure there are no collisions. To give another example, the aquatic vessel command scenario may comprise fishing Vessel Avoidance. In this case the algorithm may monitor the range and bearing and classification of contacts to ensure they remain above certain safety thresholds to avoid collision. The skilled person will appreciate that algorithms to determine several different aquatic vessel command scenarios can be produced in alternative embodiments.

At step 210 the result of the query/algorithm can be used to output information for controlling the vessel. For example, if the result indicates that the vessel is at risk of grounding or collision then an appropriate output may be produced. This may take the form of a warning being displayed, or control signals that control components, such as an engine or propeller of the vessel, that cause the vessel to slow, stop or change bearing, for example.

As mentioned above, embodiments utilise a graph database. A graph database uses graph structures for semantic queries and includes nodes, edges and properties for representing and storing data. The graph can relate the data items in the store to a collection of nodes and edges, with the edges representing the relationships between the nodes. The graph database can allow for improved inferencing of data and simplified querying compared to a conventional relational database. Graph database methods of storage can therefore describe not only the entities within the data, but also relationships between the entities. The "web" of information this creates can be easily human readable, with information able to be extracted quickly using relatively simple queries. The formal relationships encoded in the data can enable computers to reason over the database, identifying trends or drawing inferences.

In embodiments the graph database will be based on an ontology. Ontologies can be defined as a description of the concepts and relationships that can formally exist for an agent of a community of agents. Informally, ontologies can describe the classes, attributes of classes and relationships between these classes and attributes within a domain of concern in a way that can be interpreted by both human and machine users. A class may be defined as a general concept, category or classification; Something used primarily to classify or categorize other objects or things (see https://www.w3.org/2003/glossary/keyword/All/class.html?keywords=class). An attribute may be defined as a characteristic of an object (see w3.org/2003/glossary/keyword/All/attribute.html?keywords=attribute). A relationship may define interactions between classes or a class's properties (see http://www.cs.man.ac.uk/~stevensr/onto/node3.html).

The formalisation of information concepts can allow for the importing and exporting of knowledge between domains and promotes consistency of data handling. Submarine command decision support may be improved by taking a semantic "linked data" approach that utilises a formal ontology of sensor data to support automated reasoning.

A basic building block of an ontology is the semantic triplet, which comprises a subject, predicate and object. For instance, "sonar-is-a-sensor" is an example of such a semantic triplet, with the subject (sonar) being related to the object (sensor) through the predicate (is an). In order to produce such an ontology, a formal lexicon can first be constructed. The lexicon can outline and define all of the necessary terms, phrases and relationships within the domain for which the ontology is built. These can be chosen by examining the submarine domain from booklets, sessions with ex-submariners and general domain knowledge/documents. The table below illustrates a small extract of information used in an example lexicon.

| **Term** | **Source of Definition** | **Definition** | **Units** | **Data type** | **Concept type** |
|---|---|---|---|---|---|
| Array | Google | An ordered series or arrangement of things | | | Informati on |
| Autom atic Identifi cation Syste m | https://globalfishingw atch.org/faqs/what-is-ais/ | A system that transmits a ship's position so that other ships are aware of its position, to avoid collision. The International Maritime Organization (IMO) mandates the use of AIS in vessels larger than 300 gross tonnes that travel internationally. | | | Informati on |
| Beam width | | The angular distance between the two points either side of a sound beam axis where the sound pressure level is 3dB below that at the axis. | RAD | Float | Informati on |
| Classif ication | | A category that an object is part of. | | | Informati on |
| Cours eMade Good | https://encyclopedia2. thefreedictionary.com /course+made+good | The resultant direction of actual travel of a vehicle, equivalent to its bearing from the point of departure. | RAD | Float | Informati on |
| Featur eOfInt erest | SSN/SOSA | The thing whose property is being estimated or calculated in the course of an Observation to arrive at a Result. | | | Informati on |
| Latitud e | Oxford English Dictionary | The angular distance of a place north or south of the earth's equator, measured in degrees, where north is positive and south is negative. | DEG | Float | Informati on |
| Sensor | SSN/SOSA | Device, agent (including humans), or software (simulation) involved in, or implementing, a Procedure. Sensors respond to a Stimulus, e.g., a change in the environment, or Input data composed from the Results of prior Observations, and generate a Result. Sensors can be hosted by Platforms. | | | Informati on |
| Fishin g Vessel Avoida nce | The Procedure for determining the course of action to be taken by the Ownship in order to avoid a collision with a fishing vessel. | | | | Informati on |

As well as acting as the foundation of the graph database, the ontology promotes consistency in data handling and allows for the import and export of information concepts between domains. The present inventors developed a glossary of basic terms necessary for an information model for controlling an aquatic vessel in the form of a structured ontology. As detailed below, use of the ontology means that the input data processing of step 204 can involve converting the input data into Resource Description Format (RDF) format suitable for populating the graph database.

For specific embodiments the present inventors utilised the Unified Process for ONtology building (UPON) framework (see, for example, A. D. Nicola, M. Missikoff and R. Navigli, "A software engineering approach to ontology building," Information Systems, vol. 34, pp. 258-275, 2009) to determine how the ontology should be structured. UPON applies an iterative approach to ontology development, with the process being split into five main phases. First, the Requirements phase is used to broadly define the purpose of the ontology and identify the domain of interest. Next, the Analysis phase is used to conduct research on the domain and can includes conversation with SMEs and the consultation of technical documents. In the third phase, Design, the ontology is given structure in the form of classes and relationships. Each concept and relationship is defined and a knowledge graph is produced.

The ontology is then formally encoded in an RDF syntax in the Implementation phase. In specific embodiments, Terse RDF Triple Language (Turtle), which is a syntax and file format for expressing data in the RDF data model, is used. The final UPON phase, Testing, can be used to ensure the ontology remains pertinent to its intended applications by applying it to a relevant problem. In some embodiments a Turtle file encoding the concepts and relationships developed in this manner was used as the schema of the graph database, on top of which nodes containing observation data were added.

The present inventors determined that the Semantic Sensor Network (SSN) ontology (see, for example, https://www.w3.org/TR/vocab-ssn) should be used as a basis for the ontology in specific embodiments (particularly during the Design phase). SSN is designed to model sensors and observations and is highly portable. SSN contains a core set of concepts called Sensor, Observation, Sample, and Actuator (SOSA) (see, for example, A. Haller, K. Janowicz, S. J. Cox, D. Le Phuoc and M. Lefrançois, "SOSA: A lightweight ontology for sensors, observations, samples, and actuators," Journal of Web Semantics, vol. 56, pp. 110, 2019), which the inventors selected as a core around the aquatic vessel sensor ontology was built. Specifically, the observation perspective was chosen as the most relevant part of SOSA for embodiments.

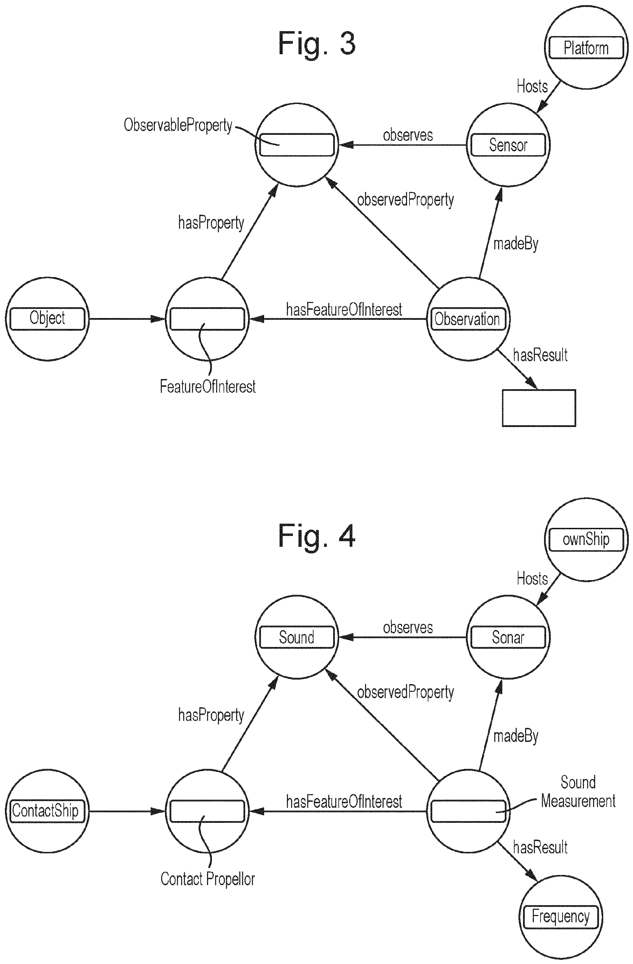

Figure 3 schematically illustrates SSN concepts used to detect sound with a sonar array. Each node represents a concept or term from the lexicon and each edge is a relationship between two concepts. For any given observation there is an associated feature of interest, i.e. the thing whose property is being measured in the observation, such as a contact vessel or the ownship (on which the sensors producing the input data are mounted). The observable property is the quality of that feature of interest that is being measured, such as latitude, speed over ground or relative bearing. Each of the examples are instances of the feature of interest or an observable property class. In the context of detecting sound from a contact vessel, the feature of interest could be considered the vessel itself, the vessel's propeller or the water surrounding the vessel.

Figure 4 illustrates schematically the actual detection of sound waves by a sonar array, from the contact vessel through to the frequency measurement made by the sonar. Incorporation of physical variables, such as frequency, distance, speed and temperature, into the ontology required units of measurements to be included. The Quantity, Unit, Dimension and Type (QUDT - see, for example, www.qudt.org) collection of ontologies were imported in some embodiments for this purpose. QUDT provides a way to formally specify various systems of units, including SI units, in an ontology.

It will be appreciated that Figures 3 and 4 are merely specific examples of graphical representations of ontologies and that in embodiments the lexicon can comprise several (e.g. over 100) terms and phrases, each of will can be represented in the overall ontology. Each concept can be linked through semantic triplets to all other related concepts, leading to a rapid increase in complexity as new terms are added. It is therefore beneficial to keep the lexicon as streamlined and unverbose as possible.

Deciding on how submarine sensor data was to be mapped into an extended ontology was a significant technical challenge during development. Much effort was needed to decide on what terms and concepts were necessary to accurately model the flow of information, from the contact to the output, to a sufficient granularity. Further, the ontology should be capable of handling uncertainty in observation measurements. Extensive research into other ontologies, such as the basic geospatial ontology, the units ontology QUDT and the uncertainty ontology URREF was conducted in order to build up a richer knowledge graph around the core SOSA terms imported and to satisfy all of the requirements of the ontology.

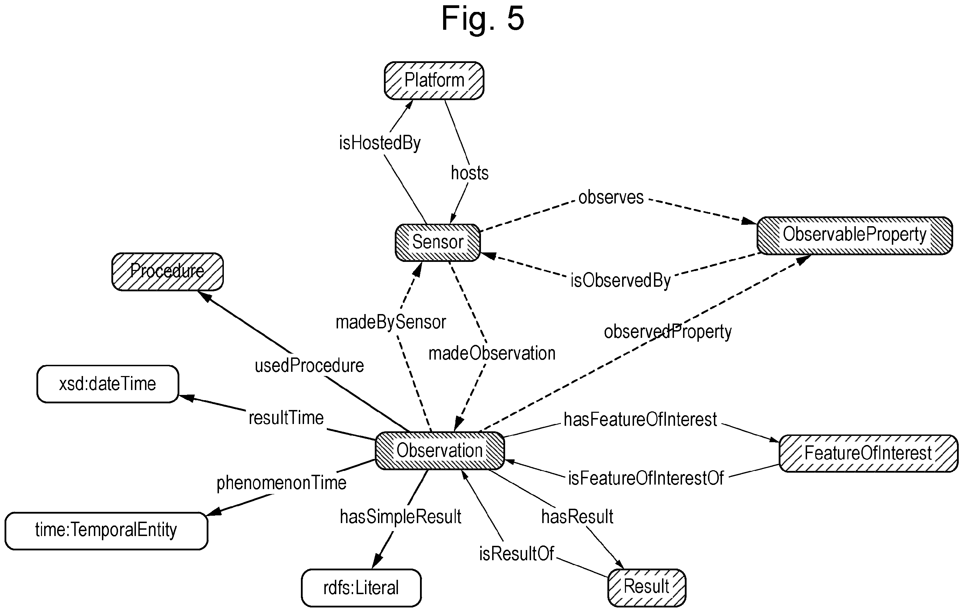

Figure 5 is a schematic diagram of a SOSA ontology observation perspective. The nodes in the Figure represent classes in the ontology and the arrows the relationships between them. For any given observation there is an associated feature of interest, i.e. the feature thing whose property is being measured in the observation, such as a contact vessel or the ownship (on which the sensors producing the input data are mounted). The observable property is the quality of that feature of interest that is being measured, such as latitude, speed over ground or relative bearing.

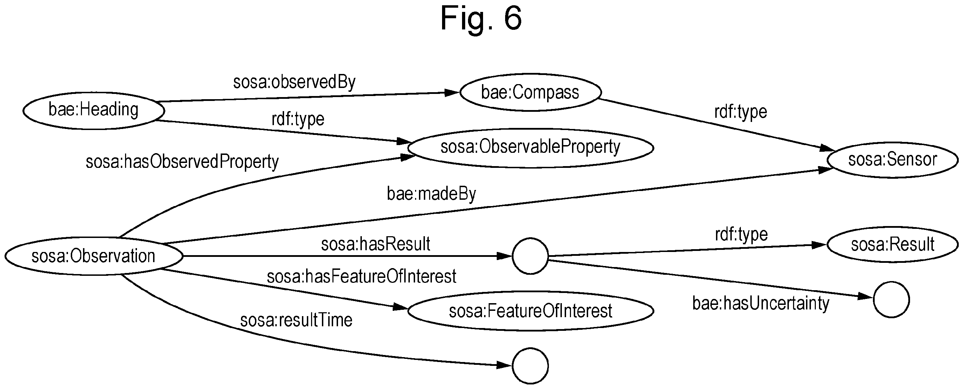

In specific embodiments additional classes and relationships have been added to the ontology on top of those already included in SOSA. Figure 6 shows how terms such as Heading, Compass and hasUncertainty fit into the overall structure of the ontology. The terms with the prefix 'bae' in the Figure have been created by the present inventors and are not part of SOSA or any other pre-existing ontology. Heading and Compass are instances of sensors included in a submarine. Other examples of such sensors include hydrophone, thermometer and accelerometer. HasUncertainty and HasProvenance are relationships that can be added. Other examples of classes and relationships added to the ontology are given the table below.

| **Term** | **Source of definition** | **Definition** |
|---|---|---|
| Identity | | |
| hasldentity | | |
| hasUncertainty | Project SEMANTIC, Option 2, Sprint 3 Tasks D, Paolo Pareti | The relation between a piece of information, and a representation of its uncertainty. |
| Veracity | http://eturwg.c4i.gmu.edu/ files/ontologies/URREF.owl | Measure of the extent to which a source reports what it assesses to be the case |
| Uncertainty | Project SEMANTIC, Option 2, Sprint 3 Tasks D, Paolo Pareti | A representation of uncertainty. |
| Ratio | | |
| Epistemic | https://www.w3.org/2005/Incubator/ urw3/wiki/UncertaintyOntology.html | The uncertainty is due to the agent whose knowledge is limited, especially for a machine agent. |
| Confidence | | |
| Credibility | | |
| wasDerivedFrom | | |
| wasAttributedTo | | |
| uncertaintyNature | https://www.w3.org/2005/Incubator/ urw3/wiki/UncertaintyOntology.html | Whether the uncertainty is an inherent property of the world or is |
| | | a lack of information |
| typeOfScale | | |
| hasUncertaintyType | Project SEMANTIC, Option 2, Sprint 3 Tasks D, Paolo Pareti | The type of the uncertainty, expressed as an URREF Uncertainty Type. |

The skilled person will appreciate that changes may be made in order to make querying the database quicker and easier, or to save space by removing unnecessary nodes and relationships.

An industry-standard for uncertainty ontology did not exist and so the present inventors developed a new model of uncertainty which may utilise terms imported from other ontologies such as URREF (see, for example, P. Costa, K. Laskey, E. Blasch and A.-L. Jousselme, "Towards unbiased evaluation of uncertainty reasoning: The URREF ontology," in Conference: Information Fusion (FUSION), 2012) and UncertaintyOntology (see, for example, "W3C Uncertainty Reasoning for the World Wide Web XG - UncertaintyOntology, available at: https://www.w3.org/2005/Incubator/urw3/wiki/UncertaintyOntology.html).

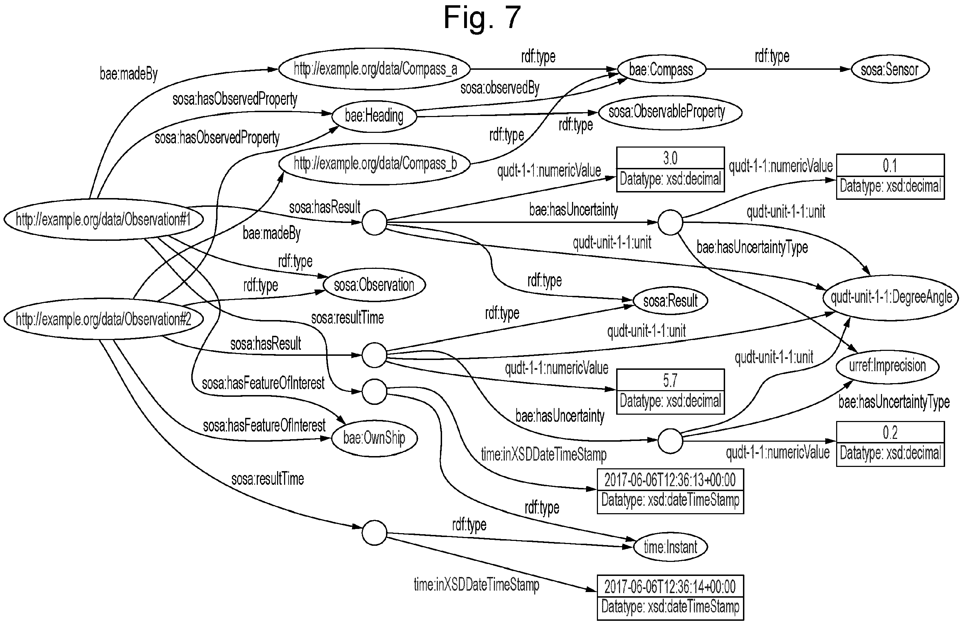

Figure 7 contains a more detailed view of an example of two separate observations of the own ship's heading, each made by a separate compass.

As discussed above, the ontology acts as the foundation of the graph database. As part of the development process, several database technologies (e.g. GraphDB and Neo4j) were investigated. The present inventors determined that Neo4j is best suited for hosting the graph database in specific embodiments. Neo4j is a graph database system developed by Neo4j Inc (see, for example, Neo4j Inc, "The Neo4j Graph Data Platform," Neo4j Inc, available at: https://neo4j.com/product/). It is a native graph data store, meaning it is built from the ground up to specifically handle data in a graph format, and therefore can be highly optimised for embodiments. Neo4j boasts a wide range of plugins and accessory tools that allow for the live import of data via Python and Apache Kafka, as well as RDF integration and database visualisation. Neo4j uses the Cypher query language to handle database querying and the importing of data from various formats such as CSV and JSON. Cypher can also be used to manually create the nodes and relationships within a database.

A first step in setting up the graph database involved importing the ontology in its RDF format. In specific embodiments this was done using the Neosemantics plugin (see Barrasa, "neosemantics (n10s): Neo4j RDF & Semantics toolkit," Neo4j Inc, available at: https://neo4j.com/labs/neosemantics/) for Neo4j. Neosemantics allows import and export of data from RDF formats, such as Turtle, automatically generating a knowledge graph structure to act as the graph database schema.

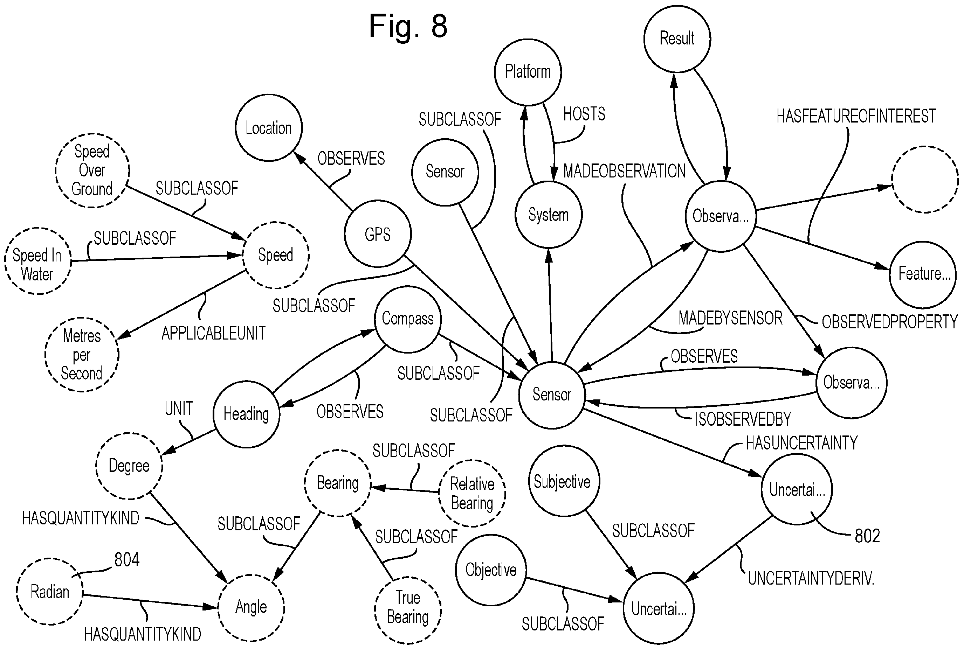

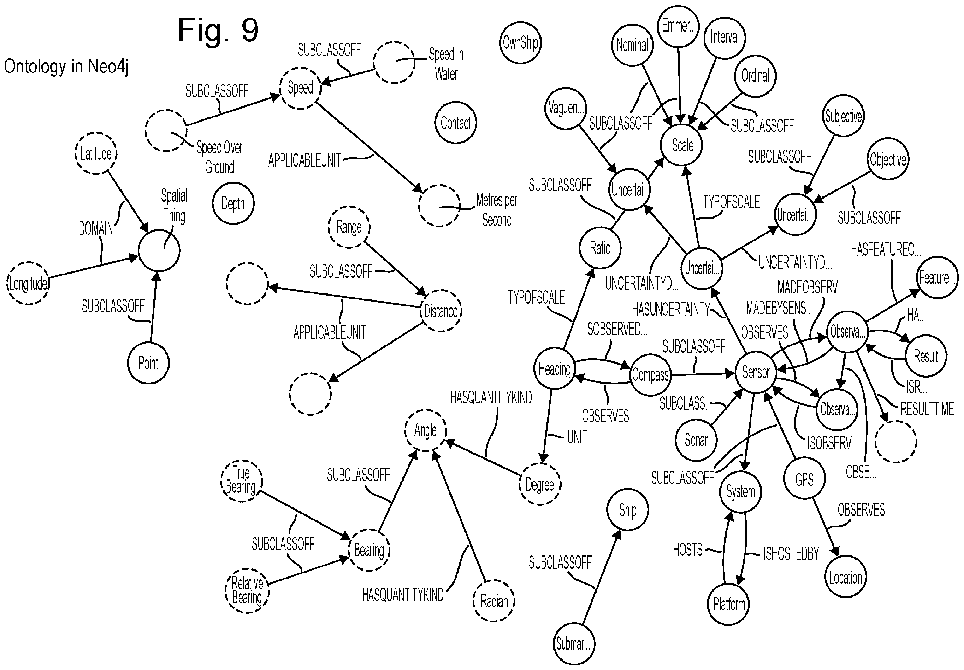

A subset of an example network of nodes and relationships created by importing the ontology can be seen in Figure 8. An example of the full ontology is illustrated in Figure 9. The green 802 and blue 804 nodes represent the overarching classes, of which individual observations are instances.

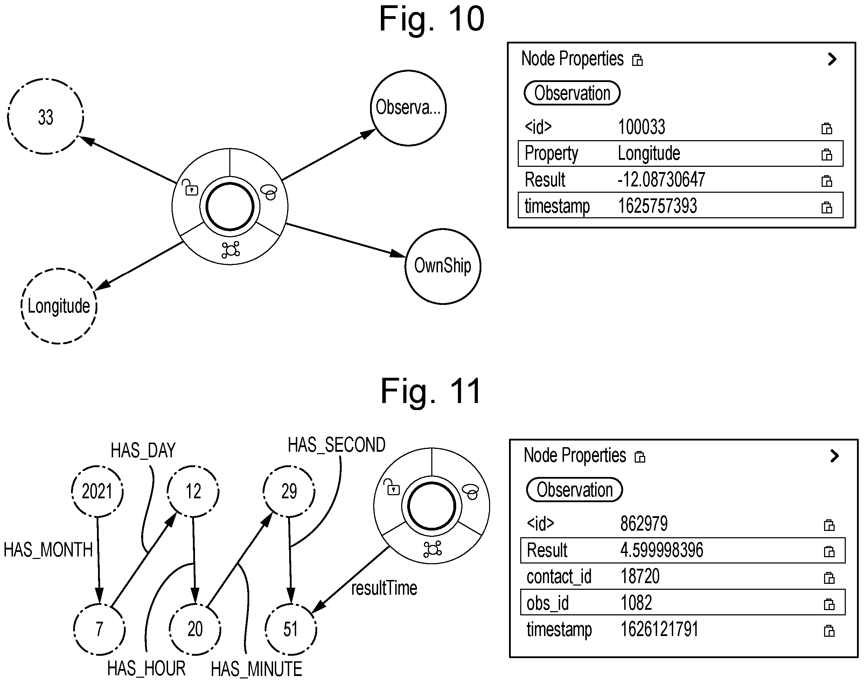

An example of how a single observation links to the ontology is shown in Figure 10. The observation node (largest circle) is a single measurement of ownship longitude. It links to the 'OwnShip' class in the ontology through the 'hasFeatureOflnterest' relationship and the 'Longitude' class via 'hasObservableProperty'. It is also an instance of the observation class, hence the link to the 'Observation' node. The other link, 'resultTime', can point to a time tree, which is discussed below.

Observation nodes have several properties associated with them, as shown on the right of Figures 8 and 10. For observations of ownship these include the numerical result of the observation and the Unix time stamp. The observable property and timestamps are included as they can make certain types of queries more efficient. Contact observations, such as that in Figure 10 also include a 'contact_id' to uniquely identify the contact object. The 'obs_id' property is a feature of the sample data gathered from the input during trials and can be omitted.

Significant time was spent by the present inventors testing various queries and plugins that could be used to map Command data into the graph database. In some cases, the input data used came in the form of two separate CSV files, one for ownship observations and the other for contact observations. Each row represented all the observations made at a given timestamp for a given feature of interest. This was the logical way to store such data in a relational database; however, in order to map the data into a graph database it was necessary to transform it such that each row represented a single observation. A Python script was written for each data file that transformed the data so that at least part of its data structure matches that of the ontology, e.g. adding a datetime column and adjusting column headings to match the ontology (for example, 'truebearing' was changed to 'TrueBearing').

With the input data properly formatted, the next step was to write a cypher query to import it into the graph database. For this the Awesome Procedures on Cypher (APOC) plugin for Neo4j was used. APOC is a library of functions and procedures that adds extra functionality to the vanilla Cypher language. Importantly, APOC allows users to write queries with conditional processing. Each row in our transformed test data represents a single observation, but also includes a feature of interest node (for contact data) and a relationship to the observable property that is being measured. It would be possible to write multiple queries that make several passes over the file, loading the observations, then the feature of interest nodes and finally forming the observable property relationships. However, APOC's conditional processing allowed this to be done in a single pass over the data which is significantly less computationally expensive. Using APOC, two main queries were written, one for importing contact data, and the other to import ownship data.

In embodiments the graph database can be populated with live input data. This can be achieved using another Python script and the Neo4j and Kafka Python modules, as well as queries previously written to import test data. During development a simulated maritime environment was created in Command with a single ownship submarine. The ownship traversed a pre-determined path whilst gathering data about its latitude, longitude, depth, bearing and speed as well as data about contact vessel bearings. The data was output from Command in the form of Apache Kafka topics which were read in by a Python script. This script read the data in in a JSON format and extracted the individual data points, which were then used to fill out the pre-written queries stored in a separate text file. The Neo4j Python library was then used to send these queries to the graph database.

The script can also be used to build a database time tree as disclosed below. Instead of building a time tree in advance, the timestamp included with the data can be used to generate a new branch for each observation (if it didn't already exist). This saved space in the database as a prebuilt time tree would likely contain unused nodes and branches. This script was able to import data roughly every six seconds. The result was a near real-time graph database of observations from the Command simulation that could be queried whilst data was still being generated by the simulation and imported.

As well as using Unix timestamps, time can be modelled in the graph database using a time tree. A time tree is a graph linking instances of time at various levels of granularity - in some cases year, month, day, hour, minute and second as shown in the example of Figure 11. Each observation node in the database links to the specific instant of time that it was made, to the nearest second, with the relationship "resultTime'.

Time trees split observations into pre-determined periods of time which can, in some cases, significantly improve query times. Certain queries are made much faster when utilising a time tree structure. For example, searching for all observations of a contact on a given day only requires that you search the subset of observations that link to that day node. If this query was instead run against the timestamp property of the observation nodes, the query engine would have to search all observations to find those with a timestamp that lies within the given range.

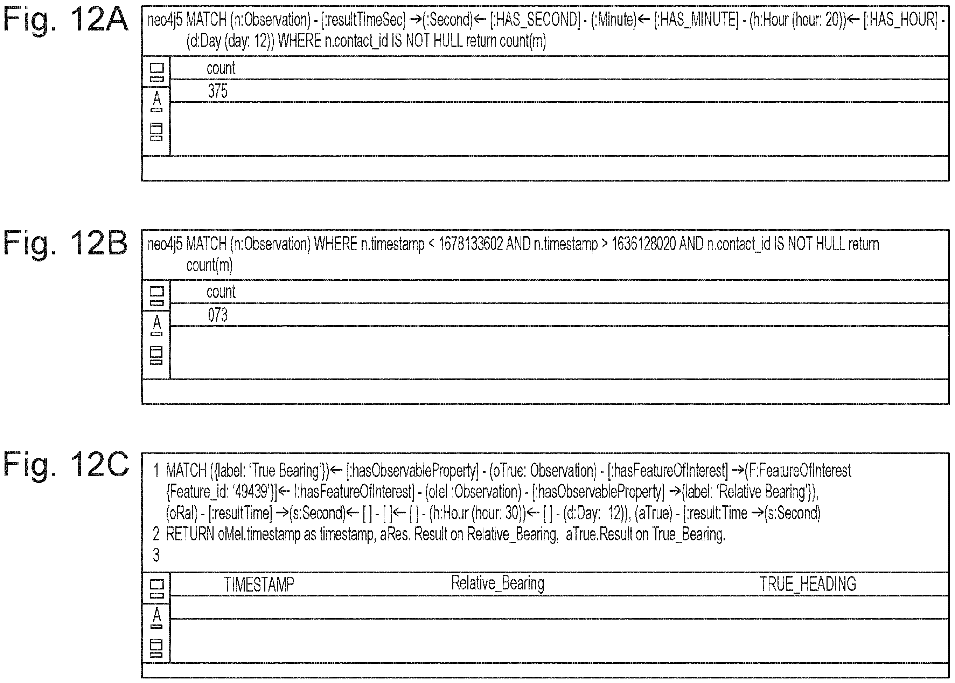

Figures 12A and 12B demonstrate this speed improvement. Both queries count the number of contacts between 20:00 and 21:00 on 12^{th} July 2021. In Figure 12A the time tree is used to find the relevant observation nodes, whereas the query in Figure 12B uses timestamp properties. The former returned a result in 6ms and the latter in 57ms. With an improvement factor of almost 10x, this demonstrates that the time tree is an extremely powerful tool for querying data in a graph database.

Time trees can be considered to have certain drawbacks which may prevent removing the timestamp property on observation nodes altogether. Writing queries over a range of time that do not lie neatly on a single time tree branch is often significantly simpler using timestamps. For example, all observations from the past hour would only require specifying a single constraint on the timestamp property, as opposed to navigating two or more separate branches of the time tree. Speed improvements are also seen when using the ontology to write queries. For example, the feature of interest nodes can be used to quickly pick out all observations associated with a specific contact, as shown in Figure 12C.

Further example queries that can be used in embodiments will now be given. The following Cypher query returns all ownship latitude, longitude and depth coordinates between 15:00 and 16:00 on 8^{th} July 2021 for the ownship:
MATCH (:Day {day: 8})-[:HAS_HOUR]->(h:Hour {hour: 15})-[]->()-[]->(s:Second)<-[:resultTime] - (oLong: Observation {Property: 'Longitude'}), (s:Second)<-[:resultTime] - (oLat: Observation {Property: 'Latitude'}), (s:Second)<-[:resultTime] - (oDepth: Observation {Property: 'Depth'})
RETURN oLat.timestamp as timestamp, oLat.Result as Latitude, oLong.Result as Longitude, oDepth.Result as Depth

| **Timestamp** | **Latitude** | **Longitude** | **Depth** |
|---|---|---|---|
| 1625759397 | 56.15700552 | -12.08730647 | -20.00003052 |
| 1625759342 | 56.15700552 | -12.08730647 | -20.00003052 |
| 1625759962 | 56.15700552 | -12 08730647 | -20.00003052 |
| 1625759966 | 56.15700552 | -12.08730647 | -20.00003052 |
| 1625759975 | 56.15700552 | -12.08730647 | -20.00003052 |
| 1625759981 | 56.15700552 | -12.08730647 | -20.00003052 |
| ... | ... | ... | ... |

The following query finds all contacts that were spotted in front of ownship on 8^{th} July 2021. Here 'in front' is defined as less than 45 degrees either side of the ownship heading. The query returns the relative bearing, contact ID and timestamp of each observation:
MATCH (:Day {day: 8})-[:HAS_HOUR]->()-[]->()-[]->()<-[:resultTime]-(n:Observation)[:hasObservableProperty]->({label:'RelativeBearing'})
WHERE n.Result > 315 OR n.Result < 45
RETURN n.timestamp as timestamp, n.Result as result, n.contact_id as contact_id

| **Timestamp** | **Result** | **contact_id** |
|---|---|---|
| 1625788796 | 349.8013195 | 18244 |
| 1625788740 | 350.1336674 | 18244 |
| 1625788733 | 345.3015603 | 26921 |
| 1625768610 | 350.9113164 | 18244 |
| 1625788505 | 351.5452118 | 18244 |
| 1625788419 | 352.059998 | 18244 |
| ... | ... | ... |

The following query counts the number of contact observations between 20:00 and 21:00 on 12th July 2021 using the time tree of Figure 10A:
MATCH (:Day {day: 8})-[:HAS_HOUR]->()-[]->()-[]->()<-[:resultTime]-(n:Observation)[:hasObservableProperty]->({label:'RelativeBearing'})
WHERE n.Result > 315 OR n.Result < 45
RETURN n.timestamp as timestamp, n.Result as result, n.contact_id as contact_id

The following query that counts the number of contact observations between 20:00 and 21:00 on 12th July 2021 using the timestamp properties on observation nodes (Figure 10B):
MATCH (n:Observation)
WHERE n.timestamp < 1626123600 AND n.timestamp > 1626120000 AND n.contact_id IS NOT NULL
RETURN count(n)

The following query finds all relative bearings and true bearings of a given contact between 20:00 and 21:00 on 12/07/2021 (Figure 10C):
MATCH ({label: 'True Bearing'})<-[:hasObservableProperty]-(oTrue: Observation)-
   [:hasFeatureOfInterest]>(f:FeatureOfInterest{Feature_id:'49439'})<-[:hasFeatureOfInterest]-(oRel:Observation)[:hasObservableProperty]->({label:'RelativeBearing'}),(oRel)-[:resultTime]->(s:Second)<-[]-()<-[](h:Hour{hour:20})<-[]-(d:Day{day:12}),(oTrue)-[:resultTime]->(s:Second)
RETURN oRel.timestamp as timestamp, oRel.Result as Relative_Bearing, oTrue.Result as True_Bearing

Terms such as 'component', 'module', 'processor' or 'unit' used herein may include, but are not limited to, a hardware device, such as circuitry in the form of discrete or integrated components, general processing units (GPUs), a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

## Claims

1. A computer-implemented method of controlling an aquatic vessel, the method comprising:
receiving (202) input data comprising a plurality of observations from a respective plurality of sensors associated with the aquatic vessel;
populating (206) a graph database using the input data, wherein the graph database is based on an ontology defining the plurality of sensors, and
performing (208) a query on the graph database to generate information relating to controlling the aquatic vessel.

2. A method according to claim 1, wherein the ontology comprises a formal ontology that defines concepts and relationships relating to the plurality of sensors.

3. A method according to claim 1 or 2, wherein the ontology is used to produce a database schema of the graph database.

4. A method according to claim 3, wherein the database schema is produced by generating a knowledge graph structure based on the ontology in Resource Description Format, RDF.

5. A method according to claim 1, wherein the populating (206) the graph database comprises adding nodes comprising the plurality of observations of the input data to the graph database.

6. A method according to claim 5, wherein the populating (206) the graph database further comprises streaming the input data to populate the graph database with new said observations.

7. A method according to claim 4, wherein the populating (206) the graph database comprises converting the input data to RDF.

8. A method according to claim 7, wherein the converting the input data comprises adjusting at least part of a data structure of the input data to match at least part of a data structure of the ontology.

9. A method according to claim 1, wherein the ontology is based on a Sensor, Observations, Sample and Actuator, SOSA, framework and further includes at least one additional class not included in the SOSA framework.

10. A method according to claim 9, wherein the additional classes comprise classes relating to uncertainty of the observations.

11. A method according to claim 1, further comprising building a time tree for the graph database that splits the observations into pre-determined periods of time.

12. A method according to claim 11, wherein a timestamp included in the input data for each said observation is used to generate a new branch for each observation in the time tree.

13. A method according to claim 1, wherein a result of the query performed on the graph database is used to determine a situation of the aquatic vessel, and the method further comprises outputting a signal for directly or indirectly controlling (210) the aquatic vessel in response to the situation.

14. A computer readable medium, or circuit, storing a computer program to operate a method according to any preceding claim.

15. An aquatic vessel control system (100) comprising at least one processor (102) configured to execute a method according to any of claims 1 to 13.
